# EUROPEAN PATENT APPLICATION

(11) **EP 1 850 437 A1**
(43) Date of publication of application: **31.10.2007**
(21) Application number: 06112973.0
(22) Date of filing: 24.04.2006
(51) Int. Cl.: H02H 1/00, H01T 4/16

(54) **An electric protection device**

(71) Applicant: ABB Technology Ltd, 8050 Zürich (CH)
(72) Inventor: Breder, Henrik, 723 47 Västeras (SE); Stenström, Lennart, 771 43 Ludvika (SE)
(74) Representative: Karlsson, Leif Karl Gunnar

(57) **Abstract**

The invention relates to an electric protection device for a switchgear and includes an arc eliminator (1).

According to the invention the device further includes a surge arrester (2) connected in parallel with the arc eliminator (1).

Thereby the surge arrester (2) provides protection to the arc eliminator (1) and vice versa.

The invention also relates to a switchgear or a distribution system including the invented device.

## Description

### Field of invention

The present invention relates to an electric protection device for a switchgear, the device including an arc eliminator.

The invention also relates to a switchgear or a distribution system provided with such a device and to a use of the device.

### Background of invention

In arcs, caused by large fault currents, very large amounts of energy are released in the form of heat and radiation. In, for example, enclosed switchgear, with its limited space, these amounts of energy give rise to increases in pressure which may blast the enclosure. Such switchgear must therefore be equipped with space-demanding relief openings through which the heated gases are given a possibility to flow out. Further, the high arc temperatures cause the material in conductors and in switching equipment to melt and even evaporate. Burnable organic material may also be ignited when subjected to the high temperature and intense radiation of the arc. By decomposition of air (NOx) and evaporation of metals, the arc gives rise to poisonous gases. It is, therefore, common for such switchgear to be provided with devices for pressure relief in the form of evacuating channels, automatically openable hatches, etc. This means that such switchgear will be bulky and costly.

In industry, there has long been a great need to primarily prevent arcs from arising. In the second place, there has been a need to minimize the arc duration. In this way, material damage as a result of the heat and the pressure increase, built up during the duration of the arc, can be reduced. Also, the risk of personal injury and poisoning is reduced.

In case of a duration of the arc of about 30 ms, a switch-gear unit may be completely blown out. The pressure wave caused by the arc usually reaches its maximum even after 10-25 ms. To reduce the material damage, there is thus a need to limit the arc duration to about 10 ms. To reduce the risk of personal injury, still shorter arc durations should be aimed at. One common way of limiting the duration of the arc is, therefore to rapidly switch the fault current to ground before the actual breaking operation. The protecting device also re-distributes the fault currents in any network with several fault current sources. By returning the fault currents to each and respective source, the maximum fault current in each point in the network is reduced.

An arc eliminator thus can be a fast closing contact, one for each phase connecting to ground or an arrangement connecting all phases to ground. Alternatively the arc eliminator can include a switch or semiconductor device of any kind of rapid change of impedance between phase conductors and the ground. The actuating energy for the contacts can be stored under continuous supervision. Tripping signal can be provided by means of the light sensors.

An arc eliminator thus performs a certain kind of protection in relation to a switchgear. An example of an arc eliminator is disclosed in US 6518 865.

Another kind of protection device is a surge arrester.

A surge arrester is normally capable of passing surge currents without any arcing within the housing of the arrester. Under normal voltage conditions, the metal-oxide varistor elements have a high resistance that essentially blocks current flow therethrough; but should a voltage surge appear across the arrester, the varistor elements will respond to the rising voltage of elements, thereby limiting the voltage across the arrester and across any protected equipment that is connected in parallel with the arrester. Normally, this current through the arrester will be confined to the solid material of the varistor elements, and no arcing will occur within the arrester.

A surge arrester can be installed between phases or phase to ground.

An example of a surge arrester is disclosed in US 4547831.

Each of the two kinds of protective device described above performs a specific function. In many cases there is a need to provide an arc eliminator as well as surge arrester in a switchgear.

Each of the two kinds of protective device also is exposed to risks that can cause damage to the respective device.

### Summary of invention

The object of the present invention is to achieve an electric protective device including an arc eliminator, which device has a low risk for failure.

This object is met in that an electric protection device for a switchgear and including an arc eliminator is provided with a surge arrester connected in parallel with the arc eliminator.

By combining these two devices it is attained a mutual protection between them. Arranged in this way the arc eliminator protects the surge arrester from excess energy and explosion. Simultaneously the surge arrester will protect the arc eliminator from excess voltages and flash-over risks.

According to a preferred embodiment the arc eliminator includes a closing contact arranged to connect the switchgear to ground in case of occurrence of an arc.

According to a further preferred embodiment the surge arrester includes a metal oxide varistor, preferably a ZnO varistor.

In these types of arc eliminator and surge arrester, respectively, the effect of the mutual protection between the two devices is optimized. The invention is particularly suitable for these types, wherethrough the advantages of the invention are made benefit of to full extent.

According to a further preferred embodiment the device includes a signal connection between the arc eliminator and the surge arrester and a measuring device arranged to measure an electric parameter related to the surge arrester, the signal connection being arranged to transmit data from the measuring device to the arc eliminator.

By this arrangement the arc eliminator automatically can be trigged to operate in response to conditions in the surge arrester line that require the arc eliminator to be activated. This does not exclude that the arc eliminator can be activated also in response to other conditions such as light and pressure.

According to a further preferred embodiment said electrical parameter is the current and/or the current time integral of the current flowing through the surge arrester.

Although other electric parameters than these in some circumstances might be useful for providing a trigging signal, the current or the current time integral or the combination of these have been found to be the most relevant in most cases.

According to a further preferred embodiment, the device includes a processing circuit arranged to control the interaction between the arc eliminator and the surge arrester.

Providing surveillance by a processing circuit, e.g. a microprocessor assures an adequate function of the device, such that the respective component will automatically be activated to protect the other one should it be required by the circumstances. By means of the processing circuit the device also can be individually tailord for different applications and the device can be adapted to changes in the operating conditions. The processing circuit may be active or passive.

According to a further preferred embodiment the processing circuit includes signal receiving means for receiving information about electric and/or other parameters relating to the arc eliminator and/or to the surge arrester and signal transmitting means for providing signals to the surge arrester and/or the arc eliminator.

By including these functions in the processing circuit, the processing circuit will be able to assure automatic operation of the ac eliminator in response to need arising from the surge arrester and/or vice versa. The extent to which all these functions are present in the processing circuit depends on the level of sophistication that is required for a certain application. The defined functions of course does not exclude other functions, to be built into the processing circuit, such as inputs relating to other conditions in the switchgear or the surrounding and programs for processing the input signals according to certain algorithms which can be predetermined and/or be dependent on the combination of input signals.

According to a further preferred embodiment, the surge arrester includes a plurality of varistor blocks connected in series and is provided with a first terminal for connection to ground, a plurality of second terminals for connection to a voltage and switching means arranged to connect one of said second terminals to the voltage.

Thereby the characterics of the surge arrester can be varied and thereby adapted to various operation conditions for the arc eliminator when cooperating with the surge arrester.

According to a further preferred embodiment the arc eliminator and the surge arrester are arranged in a common housing.

When the arc eliminator and the surge arrester are in the same housing both functions are in the same switchgear compartment.

A switchgear or a distribution system provided with the invented electric protective device and the preferred embodiment thereof have the advantages corresponding to those described above.

### Brief description of the drawings

- Fig 1: is a schematic graph illustrating a first example of the invented device.
- Fig 2: illustrates an arc eliminator suitable for use in the invented device.
- Fig 3: illustrates a surge arrester suitable for use in the invented device
- Fig 4: is a perspective view of a detail of fig 3
- Fig 5: is a schematic graph illustrating an alternative example of the invented device
- Fig 6: illustrates an alternative example of the surge arrester

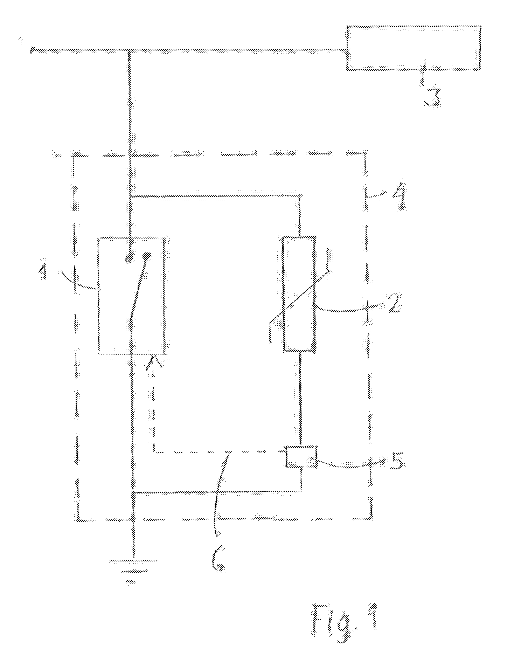

Fig 1 is a graph illustrating a first example of the invention, where 1 represents an arc eliminator, 2 a surge arrester and 3 a bustar, system, capacitor bank or other or equipment to be protected.

The arc eliminator 1 and the surge arrester 2 are in this example located in a common housing 4.

If persisting currents create excess energy or explosion, the contacts of the arc eliminator will close such that negliable current will flow through the surge arrester, whereby damage to the latter can be avoided.

If there is excess voltage or a flash-over risk, the surge arrester 2 is trigged to a low-resistance stage such that excess current flows therethrough, and the maximum voltage across the arc the arc eliminator 1 will be reduced.

In the example illustrated in fig 1 a measuring device 5 measures the current through the surge arrester 2. A signal device 6 transmits data from the measuring device 5 to the arc eliminator, for activating the same.

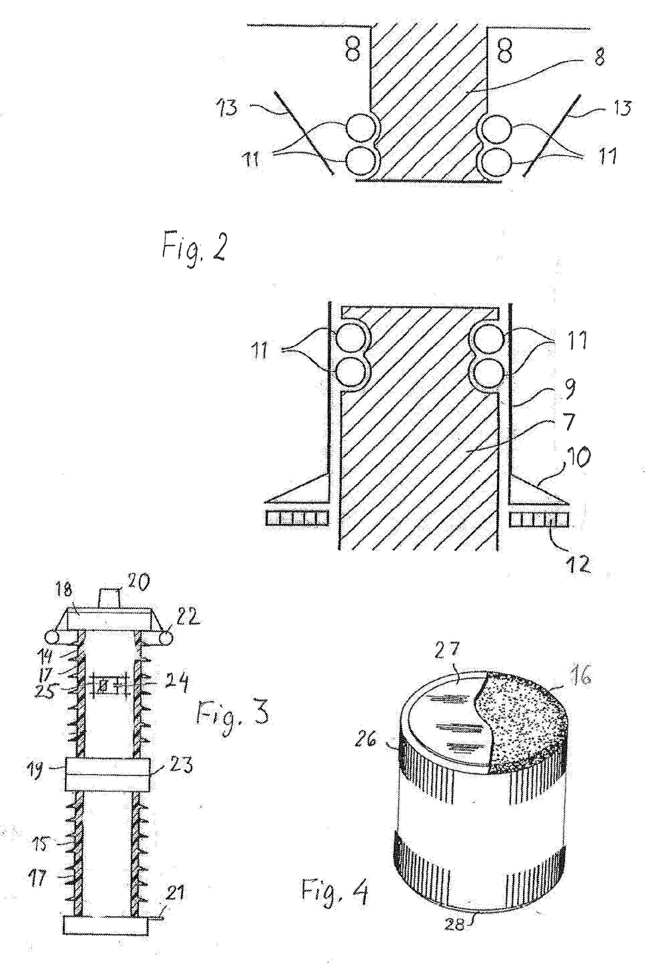

Fig 2 is an example of an arc eliminator that can be used in the device illustrated in fig 1.

The arc eliminator includes a switching device with a first contact part 7, a second contact part 8 and a movable contact part 9. The movable contact part is formed as a sleeve. The sleeve surrounds the first contact part and is formed with a flange 10. Between the first and second contact parts, respectively, and the movable contact part, contact members 11 are arranged. In the embodiment shown, these contact members are designed in the form helically wound wire. The wires surround the first and second par, respectively, and are arranged in grooves in the respective contact part. The helically wound shape permits the wire to make contact with a resilient force with the respective contact part. The contact members are adapted to allow the movable contact part a longitudinal movement with a retained low-ohmic contact with each of the first and the second contact part, respectively.

A first helical coil 12, a so-called Thomson coil, is arranged adjacent to the flange 10. In the figure, the helical coil is arranged immediately below the flange, the flange being adapted to make contact with the coil. When a current pulse flow through the coil from a current source (not shown), a variable magnetic filed arises, which induces eddy currents in the flange 10. The eddy currents, in turn, give rise to formation of a magnetic field directed opposite the first magnetic field. This gives rise to a strong repulsive force which throws away the flanged sleeve 9 against the second part.

A plurality of arc fingers 13 of spring steel are arranged around the second contact part. These are fingers are clamped into contact with the second part, in the upper part of the figure, and have their free ends, the fingertips, directed obliquely to the first contact part. The arc fingers are adapted to exhibit a deflecttion with a high resonant frequency. When the fingers are hit by the forward-moving movable contact part, a vibrating movement thereof arises. The fingertips then bounce against the movable contact part. Each time the fingertip leaves the surface of the movable contact part, a small arc arises. However, since a plurality of fingers are arranged around the second contact part and all lie in different phases and have different resonant frequencies, at all time always some fingertip is in contact with the movable contact part. This causes these arcs to be eliminated.

An example of a surge arrester that can be used in the device of the preferred invention is illustrated in fig 3.

The surge arrester shown in fig 3 includes two electrically serie-connected surge arrester units 14 and 15. Each surge arrester unit comprises one or more cylindrical zinc oxide varistor blocks arranged in a stack. The varistor or the stack of varistors is arranged centrally in an elongated porcelain housing 17 having metallic end flanges 18 and 19. The two surge arrester units are mounted together coaxially and oriented with the longitudinal axis in the vertical direction. The surge arrester is provided with a top terminal 20 for connection to a live line and a bottom terminal 21 for connection to ground. A grading ring 22 is suspended from the upper end of the surge arrester. The metallic flanges at the joint 23 between the surge arrester units 14, 15 form a galvanic connection between the varistor stacks and the outer surfaces of the porcelain housing.

A ZnO block has an equivalent circuit consisting of a capacitance 24 connected in parallel with a greatly voltage-dependent resistance 24. The capacitance 24 is dependent on the composition and dimension of the block and may, for example be between 300 and 1200 pF for each block At normal operating voltage, the capacitive part of the leakage current is predominant, and the equivalent capacitances 24, if they were allowed to act alone, would provide a purely linear voltage distribution along the surge arrester.

Each varistor block is of the conventional construction depicted in fig 4, comprising a circular cylinder 16 of sintered metal-oxide material, a thin glass or ceramic collar 26 bonded to the circular outer periphery of the cylinder 16, and flat metal electrodes 27 and 28 bonded to the upper and lower faces of the cylinder. Each cylinder 16 is of conventional metal oxide varistor formulation, preferably one containing as its principal constituent zinc oxide, and the electrodes 27 and 28 are of good conductive material, preferably arc or flame sprayed aluminium. The glass or ceramic collar 26 at its axially-opposed ends terminates short of the electrodes 27 and 28, leaving the electrodes free to make good contact with the juxtaposed electrodes of adjacent varistors when the varistors are stacked and pressed axially together in the assembled arrester.

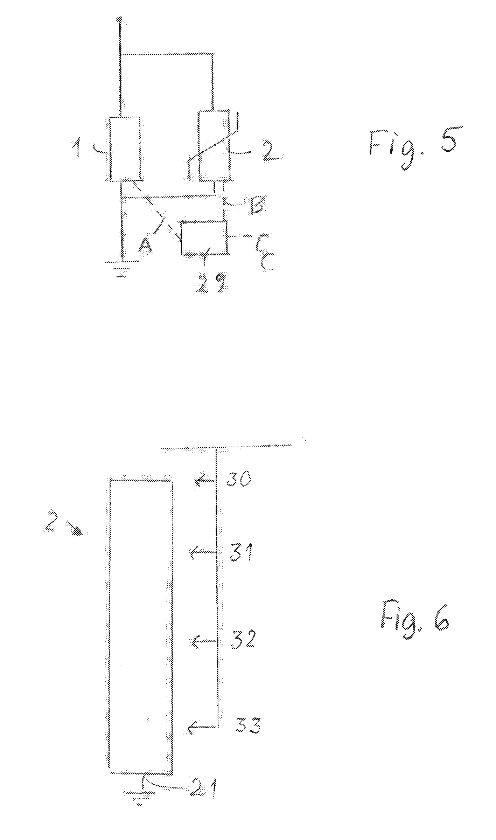

Fig 5 schematically illustrates a further example of the protection device, which includes a processing circuit 29. A first signal line A connects the processing circuit to the arc arrester 1 and a second signal line B connects the processing circuit 29 to the surge arrester 2. The signal lines A, B are capable of transferring signals representing parameters relating to the arc eliminator 1 and the surge arrester 2, respectively. Correspondingly the signal lines A, B can give actuating orders to the two components.

The actuating orders are given in response to the received signals after being processed in the processing circuit 29. A third signal line C might be arranged to provide additional information from other sources for the processing.

Fig 6 illustrates an alternative embodiment of the surge arrester that is suitable to be used in the invented device. The location of the terminal at the voltage side of the surge arrester 2 can be varied by bypassing some of the varistor blocks. Thus the connection between the live line and the surge arrester 2 can be made through either of the switches 30, 31, 32 or 33 thereby including a varying number of varistor blocks in the surge arrester.

Which one of the switches 30-33 that is connected to the surge arrester is controlled by the processing circuit 29 (se figure 5) and the signal line A also provides the processing circuit with information about the status regarding the location of the terminal.

## Claims

1. An electric protection device for a switchgear, the device including an arc eliminator (1), **characterized in that** a surge arrester (2) is connected in parallel with the arc eliminator (1).

2. A device according to claim 1, **characterized in that** the arc eliminator (1) includes a closing contact (9) arranged to connect the switchgear to ground in case of occurrence of an arc.

3. A device according to claim 1 or 2, **characterized in that** the surge arrester (2) includes at least one metal oxide varistor (16), preferably a ZnO varistor.

4. A device according to any one of claim 1 - 3, **characterized in that** the device includes a signal connection (6) between the arc eliminator (1) and the surge arrester (2) and a measuring device (5) arranged to measure an electric parameter related to the surge arrester (2), the signal connection (6) being arranged to transmit data from the measuring device (5) to the arc eliminator (2).

5. A device according to claim 4, **characterized in that** said electrical parameter is the current or the current time integral of the current flowing throw the surge arrester (2).

6. A device according to any one of claims1 - 5, **characterized in that** the device includes a processing circuit (29) arranged to control interaction between the arc eliminator (1) and the surge arrester (2).

7. A device according to claim 6, **characterized in that** the processing circuit (29) includes signal receiving means for receiving information about electrical and/or other parameters related to the arc eliminator (1) and/or the surge arrester (2) and signal transmitting means for providing actuating signals to the surge arrester (2) and/or the arc eliminator (1).

8. A device according to any of claims 1 - 7, **characterized in that** the surge arrester includes a plurality of varistor blocks (16) connected in series and is provided with a first terminal (21) for connection to ground, a plurality of second terminals for connection to a voltage and switching means (30 - 33) arranged to connect one of said second terminals to the voltage.

9. A switchgear or a distribution system provided with an electric protection device according to any of claims 1 -8.
